# EUROPEAN PATENT APPLICATION

(11) **EP 1 374 988 A2**
(43) Date of publication of application: **02.01.2004**
(21) Application number: 03253933.0
(22) Date of filing: 20.06.2003
(51) Int. Cl.: B01J 19/00

(54) **Array assay devices and methods of using the same**

(30) Priority: 21.06.2002 US 177376
(71) Applicant: Agilent Technologies, Inc., Palo Alto, CA 94306 (US)
(72) Inventor: Shea, Laurence R., Charlotte, NC 28277 (US); Summers, Douglas G., Sunnyvale, CA 94086 (US); Hilson, Richard O., Sunnyvale, CA 94087 (US)
(74) Representative: Jehan, Robert

(57) **Abstract**

Array assay devices and methods for using the same in array based assays are provided. The subject array assay devices are characterized by having a substrate (110) having at least one array (112) sealed between a rigid bottom surface (1) and a cover (3), wherein the rigid bottom surface (1) and the cover (3) are sealed to each other by a frangible seal (25). The subject device (2) may also include a sealing element (20) for forming seals around a plurality of arrays (112) to provide individual assay areas. There are also provided methods of performing an array assay. In the subject methods, a subject array assay device (2) is provided, a sample is contacted to the at least one array (112) and an array assay is performed. The frangible seal (25) may then be broken to expose the at least one array (112). The subject invention also provides for kits which include the subject devices.

## Description

The present invention relates to array assay devices and to a method of performing an array assay.

Array assays between surface bound binding agents or probes and target molecules in solution may be used to detect the presence of particular biopolymers. The surface-bound probes may be oligonucleotides, peptides, polypeptides, proteins, antibodies or other molecules capable of binding with target molecules in solution. Such binding interactions are the basis for many of the methods and devices used in a variety of different fields, e.g., genomics (in sequencing by hybridization, SNP detection, differential gene expression analysis, identification of novel genes, gene mapping, finger printing, etc.) and proteomics.

One typical array assay method involves biopolymeric probes immobilized in an array on a substrate such as a glass substrate or the like. A solution containing analytes that bind with the attached probes is placed in contact with the substrate, covered with another substrate to form an assay area and placed in an environmentally controlled chamber such as an incubator or the like. Usually, the targets in the solution bind to the complementary probes on the substrate to form a binding complex. The pattern of binding by target molecules to biopolymer probe features or spots on the substrate produces a pattern on the surface of the substrate and provides desired information about the sample. In most instances, the target molecules are labeled with a detectable tag such as a fluorescent tag, chemiluminescent tag or radioactive tag. The resultant binding interaction or complexes of binding pairs are then detected and read or interrogated, for example by optical means, although other methods may also be used. For example, laser light may be used to excite fluorescent tags, generating a signal only in those spots on the biochip that have a target molecule and thus a fluorescent tag bound to a probe molecule. This pattern may then be digitally scanned for computer analysis.

As will be apparent, control of the assay environment and conditions contributes to increased reliability and reproducibility of the array assays. However, merely placing a slide over the substrate or positioning a cover slip over the substrate, as is commonly done, is often insufficient to allow precise control over the array assay and is labor intensive as well.

' During an array assay such as a hybridization assay, the assay is often performed at elevated temperatures and care must be taken so that the array does not dry out. Using a second slide positioned over the substrate allows contents to leak an/or evaporate causing the array to dry-out during use, adversely impacting the binding assay. In addition, the substrate cannot be tipped or moved from the horizontal position without risk that the substrate or cover slip will slip off. Maintaining the array in a humid environment may reduce drying-out, but offers only an incomplete solution.

Various chambers or containers have been developed to eliminate the use of a substrate or cover slip and facilitate the above described array assays. However, while many of these chambers are effective, they often have a number of different components and require the user to manually assemble the apparatus around an array using screws to maintain the components together. Such procedures are cumbersome, take time and may introduce contaminants into the array due to the increased handling thereof during assembly of the apparatus.

The present invention seeks to provide improved array assays.

According to an aspect of the present invention, there is provided an array assay device as specified in claim 1 or 6.

According to another aspect of the present invention, there is provided a method of performing an array assay as specified in claim 7, 9 or 10.

The preferred embodiments can provide an array assay device, and methods of use thereof, that does not require assembly, is easy to use, includes minimal components, prevents drying out of the array and that may also be capable of testing multiple samples with multiple arrays without cross-contamination.

In the preferred embodiment, the subject array assay devices are provided with a substrate having at least one array sealed between a rigid bottom surface and a cover, wherein the rigid bottom surface and the cover are sealed to each other by a frangible seal. In certain embodiments, a substrate having at least one array thereon serves as the bottom surface such that a cover is sealed to the array substrate by a frangible seal. The subject device may also include a sealing element for forming seals around a plurality of arrays to provide individual assay areas. The preferred embodiments also provide methods for performing an array assay. In the subject methods, a subject array assay device is provided, a sample is contacted to the at least one array and an array assay is performed. The frangible seal may then be broken to expose the at least one array. The subject invention also includes kits which include the subject devices.

Embodiments of the present invention are described below, by way of example only, with reference to the accompanying drawings in which:
Figure 1 shows an exemplary substrate carrying an array, such as may be used in the devices of the subject invention.
Figure 2 shows an enlarged view of a portion of Figure 1 showing spots or features.
Figure 3 is an enlarged view of a portion of the substrate of Figure 2.
Figure 4 shows an exploded view of an exemplary embodiment of an array assay device according to the subject invention.
Figure 5A shows an exemplary embodiment of a rigid bottom surface having an opening therein. Figure 5B shows an exemplary embodiment of a removable shield that may be used with the rigid bottom surface of Figure 5A.
Figure 6 shows the inner surface of the cover of Figure 4.
Figure 7 shows the inner surface of the cover of Figure 4 having a plurality of individual recesses.
Figure 8 shows the inner surface of the cover of Figure 4 having a single recess partitioned by a sealing element.
Figure 9 shows a plan view of the array assay device of Figure 4 having the rigid bottom surface and the cover sealed to each other by a frangible seal.
Figure 10 shows an exemplary embodiment of a subject substrate receiving frame.
Figure 11 shows a substrate having at least on array positioned in the frame of Figure 10 and sealed between a subject rigid bottom surface and a subject cover by a frangible seal.
Figure 12 shows an exemplary embodiment of an array holder according to the subject invention.
Figure 13 shows the array holder of Figure 12 having reduced length substrates with at least one array thereon inserted therein.
Figure 14A shows an exploded view of an exemplary embodiment of an array assay device having a cover frangibley sealable to an array substrate according to the subject invention. Figure 14B shows the array assay device of Figure. 14B sealed together by a frangible seal.

### DEFINITIONS

The term "polymer" refers to any compound that is made up of two or more monomeric units covalently bonded to each other, where the monomeric units may be the same or different, such that the polymer may be a homopolymer or a heteropolymer. Representative polymers include peptides, polysaccharides, nucleic acids and the like, where the polymers may be naturally occurring or synthetic.

The term "monomer" as used herein refers to a chemical entity that can be covalently linked to one or more other such entities to form an oligomer. Examples of "monomers" include nucleotides, amino acids, saccharides, peptides, and the like. In general, the monomers used in conjunction with the present invention have first and second sites (e.g., C-termini and N-termini, or 5' and 3' sites) suitable for binding to other like monomers by means of standard chemical reactions (e.g., condensation, nucleophilic displacement of a leaving group, or the like), and a diverse element which distinguishes a particular monomer from a different monomer of the same type (e.g., an amino acid side chain, a nucleotide rigid bottom surface, etc.). The initial substrate-bound monomer is generally used as a building-block in a multi-step synthesis procedure to form a complete ligand, such as in the synthesis of oligonucleotides, oligopeptides, and the like.

The term "oligomer" is used herein to indicate a chemical entity that contains a plurality of monomers. As used herein, the terms "oligomer" and "polymer" are used interchangeably. Examples of oligomers and polymers include polydeoxyribonucleotides, polyribonucleotides, other polynucleotides which are B or C-glycosides of a purine or pyrimidine rigid bottom surface, polypeptides, polysaccharides, and other chemical entities that contain repeating units of like chemical structure.

The term "ligand" as used herein refers to a moiety that is capable of covalently or otherwise chemically binding a compound of interest. The ligand may be a portion of the compound of interest. The term "ligand" in the context of the invention may or may not be an "oligomer" as defined above. The term "ligand" as used herein may also refer to a compound that is synthesized on the substrate surface as well as a compound is "pre-synthesized" or obtained commercially, and then attached to the substrate surface.

The terms "array" "biopolymeric array" "biochip" and "biomolecular array" are used herein interchangeably to refer to an arrangement of ligands or molecules of interest on a substrate surface which can be used for analyte detection, combinatorial chemistry, or other applications wherein a two-dimensional arrangement of molecules of interest can be used. That is, the terms refer to an ordered pattern of probe molecules adherent to a substrate, i.e., wherein a plurality of molecular probes are bound to a substrate surface and arranged in a spatially defined and physically addressable manner. Such arrays may be comprised of oligonucleotides, peptides, polypeptides, proteins, antibodies, or other molecules used to detect sample molecules in a sample fluid.

The term "biomolecule" means any organic or biochemical molecule, group or species of interest which may be formed in an array on a substrate surface. Exemplary biomolecules include peptides, proteins, amino acids and nucleic acids.

The term "peptide" as used herein refers to any compound produced by amide formation between a carboxyl group of one amino acid and an amino group of another group.

The term "oligopeptide" as used herein refers to peptides with fewer than about 10 to 20 residues, *i.e.* amino acid monomeric units.

The term "polypeptide" as used herein refers to peptides with more than 10 to 20 residues.

The term "protein" as used herein refers to polypeptides of specific sequence of more than about 50 residues.

The term "nucleic acid" as used herein means a polymer composed of nucleotides, e.g. deoxyribonucleotides or ribonucleotides, or compounds produced synthetically (e.g., PNA as described in U.S. Patent No. 5,948,902 and the references cited therein) which can hybridize with naturally occurring nucleic acids in a sequence specific manner analogous to that of two naturally occurring nucleic acids, e.g., can participate in Watson-Crick base pairing interactions.

The terms "ribonucleic acid" and "RNA"s used herein mean a polymer composed of ribonucleotides.

The terms "deoxyribonucleic acid" and "DNA" as used herein mean a polymer composed of deoxyribonucleotides.

The term "oligonucleotide" as used herein denotes single stranded nucleotide multimers of from about 10 to 100 nucleotides and up to 200 nucleotides in length.

The term "polynucleotide" as used herein refers to single or double stranded polymer composed of nucleotide monomers of generally greater than 100 nucleotides in length.

The term "sample" as used herein relates to a material or mixture of materials, typically, although not necessarily, in fluid form, containing one or more components of interest.

The terms "nucleoside" and "nucleotide" are intended to include those moieties which contain not only the known purine and pyrimidine rigid bottom surfaces, but also other heterocyclic rigid bottom surfaces that have been modified. Such modifications include methylated purines or pyrimidines, acylated purines or pyrimidines, or other heterocycles. In addition, the terms "nucleoside" and "nucleotide" include those moieties that contain not only conventional ribose and deoxyribose sugars, but other sugars as well. Modified nucleosides or nucleotides also include modifications on the sugar moiety, e.g., wherein one or more of the hydroxyl groups are replaced with halogen atoms or aliphatic groups, or are functionalized as ethers, amines, or the like.

The term "chemically inert" is used herein to mean substantially unchanged chemically by contact with reagents and conditions normally involved in array based assays such as hybridization reactions or any other related reactions or assays, e.g., proteomic array applications.

The term "communicating" information refers to transmitting data representing that information as electrical signals over a suitable communication channel (for example, a private or public network).

The term "forwarding" an item refers to any means of getting that item from one location to the next, whether by physically transporting that item or otherwise (where that is possible) and includes, at least in the case of data, physically transporting a medium carrying the data or communicating the data.

The term "physically inert" is used herein to mean substantially unchanged physically by contact with reagents and conditions normally involved in array based assays such as hybridization reactions or any other related assays or reactions.

The terms "target" "target molecule" and "analyte" are used herein interchangeably and refer to a known or unknown molecule in a sample, which will hybridize to a molecular probe on a substrate surface if the target molecule and the molecular probe contain complementary regions, i.e., if they are members of a specific binding pair. In general, the target molecule is a biopolymer, i.e., an oligomer or polymer such as an oligonucleotide, a peptide, a polypeptide, a protein, and antibody, or the like.

The term "hybridization" as used herein refers to binding between complementary or partially complementary molecules, for example as between the sense and anti-sense strands of double-stranded DNA. Such binding is commonly non-covalent binding, and is specific enough that such binding may be used to differentiate between highly complementary molecules and others less complementary. Examples of highly complementary molecules include complementary oligonucleotides, DNA, RNA, and the like, which comprise a region of nucleotides arranged in the nucleotide sequence that is exactly complementary to a probe; examples of less complementary oligonucleotides include ones with nucleotide sequences comprising one or more nucleotides not in the sequence exactly complementary to a probe oligonucleotide.

The term "hybridization solution" or "hybridization reagent" used herein interchangeably refers to a solution suitable for use in a hybridization reaction.

The terms "mix" and "mixing" as used herein means to cause fluids to flow within a volume so as to more uniformly distribute solution components, as after different solutions are combined or after a solution is newly introduced into a volume or after a component of the solution is locally depleted.

The term "probe" as used herein refers to a molecule of known identity adherent to a substrate.

The term "remote location" refers to a location other than the location at which the array is present and hybridization occur. As such, when one item is indicated as being "remote" from another, what is meant is that the two items are at least in different buildings, and may be at least one mile, ten miles, or at least one hundred miles apart.

The term "sealing element" is used herein to refer to any sealing device or structure that produces a seal between two surfaces, such as a gasket, a lip, material interface, ledge or ridge, viscous sealant, or the like.

The term "substantially vapor and fluid tight" or "substantially vapor and fluid tight seal" used herein interchangeably means any seal that is produced by any sealing device or structure that prevents substantial evaporation of fluidic contents from an area bounded by the seal, e.g., from an assay area bounded by such a seal.

The term "substrate" as used herein refers to a surface upon which marker molecules or probes, e.g., an array, may be adhered. Glass slides are the most common substrate for biochips, although fused silica, silicon, plastic and other materials are also suitable.

The term "surfactant" is used herein in its conventional sense to refer to a compound effective to reduce surface tension in a fluid and improve wetting of surfaces. Suitable surfactants herein include anionic, cationic, amphoteric and nonionic surfactants, with anionic surfactants and polymeric nonionic surfactants being preferred in certain embodiments.

The term "thermally stable" is used herein to mean substantially unchanged, i.e., does not degrade or otherwise chemically react at temperatures used for array assays.

The term "flexible" is used herein to refer to a structure, e.g., a bottom surface or a cover, that is capable of being bent, folded or similarly manipulated without breakage. For example, a cover is flexible if it is capable of being peeled away from the bottom surface without breakage.

The term "rigid" is used herein to refer to a structure e.g., a bottom surface or a cover that does not readily bend without breakage, i.e., the structure is not flexible.

The term "stringent hybridization conditions" as used herein refers to conditions that are that are compatible to produce duplexes on an array surface between complementary binding members, i.e., between probes and complementary targets in a sample, e.g., duplexes of nucleic acid probes, such as DNA probes, and their corresponding nucleic acid targets that are present in the sample, e.g., their corresponding mRNA analytes present in the sample. An example of stringent hybridization conditions is hybridization at 50°C or higher and 0.1×SSC (15 mM sodium chloride/1.5 mM sodium citrate). Another example of stringent hybridization conditions is overnight incubation at 42°C in a solution: 50% formamide, 5 × SSC (150 mM NaCI, 15 mM trisodium citrate), 50 mM sodium phosphate (pH7.6), 5 × Denhardt's solution, 10% dextran sulfate, followed by washing the filters in 0.1 × SSC at about 65°C. Stringent hybridization conditions are hybridization conditions that are at least as stringent as the above representative conditions. Other stringent hybridization conditions are known in the art and may also be employed to identify nucleic acids of this particular embodiment of the invention.

Array assay devices and methods for using the same in array based assays are provided. The preferred array assay devices are characterized by having a substrate having at least one array sealed between a rigid bottom surface and a cover, wherein the rigid bottom surface and the cover are sealed to each other by a frangible seal. In certain embodiments, an array substrate having at least one array thereon serves as the bottom surface such that a cover is sealed to the substrate by a frangible seal. The subject device may also include a sealing element for forming seals around a plurality of arrays to provide individual assay areas. The subject invention also includes methods for performing an array assay. In the preferred methods, a subject array assay device is provided, a sample is contacted to the at least one array and an array assay is performed. The frangible seal may then be broken to expose the at least one array. The subject invention also includes kits which include the subject devices.

Before the preferred embodiments are described, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range is encompassed within the claims. The upper and lower limits of these smaller ranges may independently be included in the smaller ranges is also encompassed within the claims, subject to any specifically excluded limit in the stated range. Where the stated range includes one or both of the limits, ranges excluding either both of those included limits are also included in the claims.

It must be noted that as used herein and in the appended claims, the singular forms "a", "an", and "the" include plural referents unless the context clearly dictates otherwise. Thus, for example, reference to "an access port" includes a plurality of such access ports and reference to "the array" includes reference to one or more arrays and equivalents thereof known to those skilled in the art, and so forth.

The teachings herein can be used with a number of different types of arrays in which a plurality of distinct polymeric binding agents are stably associated with at least one surface of a substrate or solid support. The polymeric binding agents may vary widely, however polymeric binding agents of particular interest include peptides, proteins, nucleic acids, polysaccharides, synthetic mimetics of such biopolymeric binding agents, etc. In many embodiments of interest, the biopolymeric arrays are arrays of nucleic acids, including oligonucleotides, polynucleotides, cDNAs, mRNAs, synthetic mimetics thereof, and the like.

While the subject devices find use in array hybridization assays, the subject devices also find use in any suitable binding assay in which members of a specific binding pair interact. That is, any of a number of different binding assays may be performed with the subject devices, where typically a first member of a binding pair is stably associated with the surface of a substrate and a second member of a binding pair is free in a sample, where the binding members may be; ligands and receptors, antibodies and antigens, complementary nucleic acids, and the like. For ease of description only, the subject devices and methods described below will be described primarily in reference to hybridization assays by way of example only, where such examples are not intended to limit the scope of the claims. It will be appreciated by those of skill in the art that the subject devices and methods may be employed for use with other binding assays as well, such as immunoassays, proteomic assays, etc.

Representative arrays used in the preferred embodiments will be described first to provide a proper foundation for the subject invention. Next, devices employed are described in greater detail, followed by a detailed description of the subject methods and kits which include the subject devices.

### Representative Biopolymeric Arrays

As mentioned above, the devices of the preferred embodiments are used with arrays and more specifically biopolymeric arrays. Such biopolymeric arrays find use in a variety of applications, including gene expression analysis, drug screening, nucleic acid sequencing, mutation analysis, and the like. These biopolymeric arrays include a plurality of ligands or molecules or probes (i.e., binding agents or members of a binding pair) deposited onto the surface of a substrate in the form of an "array" or pattern.

The biopolymeric arrays include at least two distinct polymers that differ by monomeric sequence attached to different and known locations on the substrate surface. Each distinct polymeric sequence of the array is typically present as a composition of multiple copies of the polymer on a substrate surface, e.g., as a spot or feature on the surface of the substrate. The number of distinct polymeric sequences, and hence spots or similar structures, present on the array may vary, where a typical array may contain more than about ten, more than about one hundred, more than about one thousand, more than about ten thousand or even more than about one hundred thousand features in an area of less than about 20 cm² or even less than about 10 cm². For example, features may have widths (that is, diameter, for a round spot) in the range from about 10 µm to about 1.0 cm. In other embodiments, each feature may have a width in the range from about 1.0 µm to about 1.0 mm, usually from about 5.0 µm to about 500 µm and more usually from about 10 µm to about 200 µm. Non-round features may have area ranges equivalent to that of circular features with the foregoing width (diameter) ranges. At least some, or all, of the features are of different compositions (for example, when any repeats of each feature composition are excluded, the remaining features may account for at least about 5%, 10% or 20% of the total number of features). Interfeature areas will typically (but not essentially) be present which do not carry any polynucleotide (or other biopolymer or chemical moiety of a type of which the features are composed). Such interfeature areas typically will be present where the arrays are formed by processes involving drop deposition of reagents, but may not be present when, for example, photolithographic array fabrication process are used. It will be appreciated though, that the interfeature areas, when present, could be of various sizes and configurations. The spots or features of distinct polymers present on the array surface are generally present as a pattern, where the pattern may be in the form of organized rows and columns of spots, e.g. a grid of spots, across the substrate surface, a series of curvilinear rows across the substrate surface, e.g. a series of concentric circles or semi-circles of spots, and the like.

In the broadest sense, the arrays are arrays of polymeric or biopolymeric ligands or molecules, i.e., binding agents, where the polymeric binding agents may be any of: peptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like.

The arrays may be produced using any convenient protocol. Various methods for forming arrays from pre-formed probes, or methods for generating the array using synthesis techniques to produce the probes *in situ,* are generally known in the art. See, for example, Southern, U.S. Patent No. 5,700,637; Pirrung, et al., U.S. Patent No. 5,143,854 and Fodor, et al. (1991) *Science* 251:767-777 and PCT International Publication No. WO 92/10092. For example, probes can either be synthesized directly on the solid support or substrate to be used in the array assay or attached to the substrate after they are made. Arrays may be fabricated using drop deposition from pulse jets of either polynucleotide precursor units (such as monomers) in the case of *in situ* fabrication, or the previously obtained polynucleotide. Such methods are described in detail in, for example, the previously cited references including U.S. Patent Nos: 6,242,266, 6,232,072, 6,180,351, 6,171,797, and 6,323,043; and U.S. Patent Application Serial No. 09/302,898 filed April 30, 1999 by Caren et al., and the references cited therein.

Other drop deposition methods may be used for fabrication. Also, instead of drop deposition methods, photolithographic array fabrication methods may be used such as described in U.S. Patent Nos. 5,599,695, 5,753,788, and 6,329,143.

As mentioned above, interfeature areas need not be present, particularly when the arrays are made by photolithographic methods as described in those patents.

A variety of solid supports or substrates may be used, upon which an array may be positioned. In certain embodiments, a plurality of arrays may be stably associated with one substrate. For example, a plurality of arrays may be stably associated with one substrate, where the arrays are spatially separated from some or all of the other arrays associated with the substrate.

The substrate may be selected from a wide variety of materials including, but not limited to, natural polymeric materials, particularly cellulosic materials and materials derived from cellulose, such as fiber containing papers, e.g., filter paper, chromatographic paper, etc., synthetic or modified naturally occurring polymers, such as nitrocellulose, cellulose acetate, poly (vinyl chloride), polyamides, polyacrylamide, polyacrylate, polymethacrylate, polyesters, polyolefins, polyethylene, polytetrafluoro-ethylene, polypropylene, poly (4-methylbutene), polystyrene, poly(ethylene terephthalate), nylon, poly(vinyl butyrate), cross linked dextran, agarose, etc.; either used by themselves or in conjunction with other materials; fused silica (e.g., glass), bioglass, silicon chips, ceramics, metals, and the like. For example, substrates may include polystyrene, to which short oligophosphodiesters, e.g., oligonucleotides ranging from about 5 to about 50 nucleotides in length, may readily be covalently attached (Letsinger et al. (1975) *Nucl. Acids Res.* 2:773-786), as well as polyacrylamide (Gait et al. (1982) *Nucl. Acids Res.* 10:6243-6254), silica (Caruthers et al. (1980) *Tetrahedron Letters* 21:719-722), and controlled-pore glass (Sproat et al. (1983) *Tetrahedron Letters* 24:5771-5774). Additionally, the substrate can be hydrophilic or capable of being rendered hydrophilic.

Suitable substrates may exist, for example, as sheets, tubing, spheres, containers, pads, slices, films, plates, slides, strips, disks, etc. The substrate is usually flat, but may take on alternative surface configurations. The substrate can be a flat glass substrate, such as a conventional microscope glass slide, a cover slip and the like. Common substrates used for the arrays of probes are surface-derivatized glass or silica, or polymer membrane surfaces, as described in Maskos, U. et al., *Nucleic Acids Res,* 1992, 20:1679-84 and Southern, E. M. et al., *Nucleic acids Res,* 1994, 22:1368-73.

Each array may cover an area of less than about 100 cm², or even less than about 50 cm², 10 cm² or 1 cm². In many embodiments, the substrate carrying the one or more arrays will be shaped generally as a rectangular solid (although other shapes are possible), having a length of more than about 4 mm and less than about 1 m, usually more than about 4 mm and less than about 600 mm, more usually less than about 400 mm; a width of more than about 4 mm and less than about 1 m, usually less than about 500 mm and more usually less than about 400 mm; and a thickness of more than about 0.01 mm and less than about 5.0 mm, usually more than about 0.1 mm and less than about 2 mm and more usually more than about 0.2 and less than about 1 mm. With arrays that are read by detecting fluorescence, the substrate may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, the substrate may transmit at least about 20%, or about 50% (or even at least about 70%, 90%, or 95%), of the illuminating light incident on the substrate as may be measured across the entire integrated spectrum of such illuminating light or alternatively at 532 nm or 633 nm.

Immobilization of the probe to a suitable substrate may be performed using conventional techniques. See, e.g., Letsinger et al. (1975) *Nucl. Acids Res.* 2:773-786; Pease, A.C. et al., *Proc. Nat. Acad. Sci. USA,* 1994, 91:5022-5026, and AOligonucleotide Synthesis, a Practical Approach," Gait, M.J. (ed.), Oxford, England: IRL Press (1984). The surface of a substrate may be treated with an organosilane coupling agent to functionalize the surface. See, e.g., Arkins, ASilane Coupling Agent Chemistry," *Petrarch Systems Register and Review,* Eds. Anderson et al. (1987) and U.S. Patent No. 6,258,454.

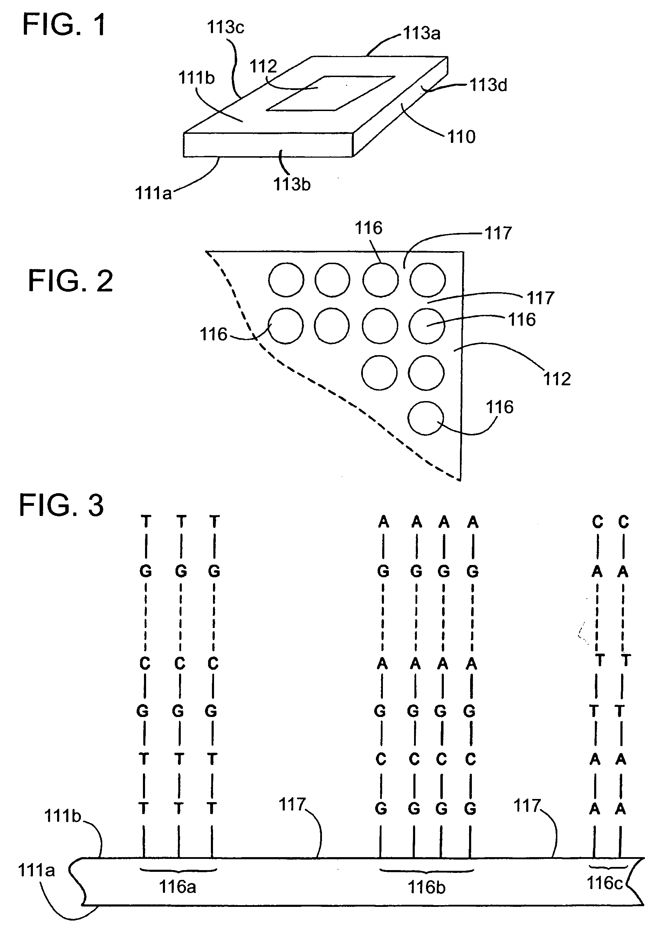

Referring first to Figures 1-3, typically biopolymeric arrays of the preferred embodiments use a contiguous planar substrate 110 carrying an array 112 disposed on a rear surface 111b of substrate 110. It will be appreciated though, that more than one array (any of which are the same or different) may be present on rear surface 111b, with or without spacing between such arrays. That is, any given substrate may carry one, two, four or more arrays disposed on a front surface of the substrate and depending on the use of the array, any or all of the arrays may be the same or different from one another and each may contain multiple spots or features. The one or more arrays 112 usually cover only a portion of the rear surface 111b, with regions of the rear surface 111b adjacent the opposed sides 113c, 113d and leading end 113a and trailing end 113b of slide 110, not being covered by any array 112. A front surface 111a of the slide 110 does not carry any arrays 112. Each array 112 can be designed for testing against any type of sample, whether a trial sample, reference sample, a combination of them, or a known mixture of biopolymers such as polynucleotides. Substrate 110 may be of any shape, as mentioned above.

As mentioned above, array 112 contains multiple spots or features 116 of biopolymers, e.g., in the form of polynucleotides. As mentioned above, all of the features 116 may be different, or some or all could be the same. The interfeature areas 117 could be of various sizes and configurations. Each feature carries a predetermined biopolymer such as a predetermined polynucleotide (which includes the possibility of mixtures of polynucleotides). It will be understood that there may be a linker molecule (not shown) of any known types between the rear surface 111b and the first nucleotide.

Substrate 110 may carry on front surface 111a, an identification code, e.g., in the form of bar code (not shown) or the like printed on a substrate in the form of a paper label attached by adhesive or any convenient means. The identification code contains information relating to array 112, where such information may include, but is not limited to, an identification of array 112, i.e., layout information relating to the array(s), etc.

### Array Assay Devices

As summarized above, the array assay devices of the preferred embodiments are used with a substrate having at least one array thereon to perform an array assay procedure. Generally, the subject array assay devices include a substrate having at least one array thereon sealed between a rigid bottom surface and a cover, which elements are sealed to each other by a frangible seal. In certain embodiments, a substrate having at least one array thereon serves as the bottom surface such that a cover is sealed to the array substrate by a frangible seal. The device may also include a sealing element, for example where more than one array is present on a substrate, a sealing element may form individual, substantially vapor and fluid light assay areas around each array such that multiple samples may be tested with multiple arrays without cross-contamination. The subject array assay devices usually also include at least one access port for the introduction and/or removal of fluids and/or gases from the assay area.

The array assay devices may assume a variety of shapes ranging from simple to complex, with the only limitation being that they are suitably shaped to receive (i.e., retain or hold) at least one array. In many embodiments, the array assay devices will assume a circular, square or rectangular shape, although other shapes are possible as well, such as irregular or complex shapes. For example, in those embodiments where at least one array is stably associated with a substrate that is a microscope slide, e.g., a 1" × 3" glass microscope slide as is known in the art, the array assay device may be similarly rectangularly shaped.

Similarly, the size of the array assay devices may vary depending on a variety of factors, including, but not limited to, the size of the array substrate and the like. Generally, the subject array assay devices will be sized to be easily transportable or moveable. In certain embodiments of the subject devices having a substantially rectangular shape, the length of the array assay devices typically ranges from about 8 mm to about 30 mm, usually from about 8 mm to about 15 mm and more usually from about 8 mm to about 10 mm, the width typically ranges from about 5 mm to about 10 mm, usually from about 5 mm to about 8 mm and more usually from about 5 mm to about 7 mm and the thickness typically ranges from about 2 mm to about 20 mm. However, these dimensions are exemplary only and may vary as appropriate.

As mentioned above, a feature of the subject devices is that at least the bottom surface of the array assay device is rigid, where the cover may be flexible or rigid. By rigid bottom surface or rigid cover it is meant that the bottom surface or cover, if rigid, cannot be substantially bent or folded without breaking. By flexible cover it is meant the cover, if flexible, may be substantially bent or folded without breaking, tearing, ripping, etc. For example, a flexible cover is capable of being peeled back or away from the rigid bottom surface without breaking. Accordingly, the bottom surface and the cover may be made from the same or different material. However, the material used to fabricate both the subject rigid bottom surface and the cover will not substantially interfere with the assay reagents and will have minimal non-specific binding characteristics, e.g., substantially chemically inert, thermally stable, etc. Specifically, the materials should be chemically and physically stable under conditions employed for the array assay. Examples of materials which maybe used to fabricate the rigid bottom surface include, but are not limited to, plastics such as polytetrafluoroethylene, polypropylene, polystyrene, polycarbonate, PVC, and blends thereof, stainless steel and alloys thereof, siliceous materials, e.g., glasses, fused silica, ceramics and the like. Examples of materials which may be used to fabricate the cover include, but are not limited to, plastics such as polytetrafluoroethylene, polypropylene, polystyrene, polycarbonate, PVC, and blends thereof, stainless steel and alloys thereof, siliceous materials, e.g., glasses, fused silica, ceramics and the like. As will be apparent to those of skill in the art, the subject devices or any component thereof may be manufactured to be re-useable or single use. That is, one or more components of the subject array assay devices may be reusable while other components may be single use. For example, the subject array assay devices may include a substrate receiving frame and/or an array holder, which will be described in greater detail below, where the substrate receiving frame and/or holder may be single use or disposable while the array assay device, i.e., the rigid bottom surface and the cover, may be reusable, or vice versa.

Referring to the Figures,

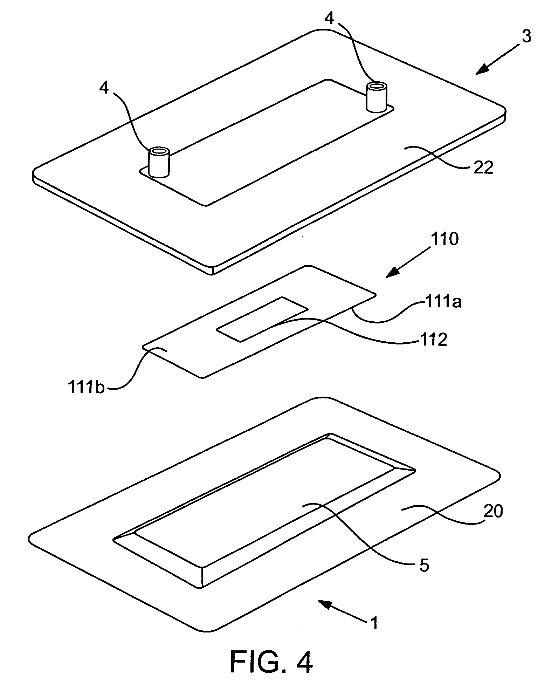

Figure 4 shows an exploded view of an exemplary array assay device 2 having a rigid bottom surface 1 and a cover 3, shown here with substrate 110, as described above, positioned therebetween.

Rigid bottom surface 1 has a substantially planar array positioning area 5, upon which substrate 110 is positioned such that the array side 111b of the substrate 110 faces towards the cover 3. The substantially planar array positioning area 5 is surrounded by a border 20, which is typically also substantially planar. The substantially planar array positioning area 5 may be slightly elevated or raised relative to the border 20, as shown, or may be slightly depressed or lowered relative to the border 20. In those embodiments where the substantially planar array positioning area 5 is slightly depressed relative to the border 20, the substrate 110 may be captured or held in the depressed area by side tabs or interference points, e.g., flexible side tabs or flexible interference points (not shown) along the sidewalls of the depressed area. The area of the border 20 that forms the frangible seal that seals the rigid bottom surface 1 to the cover 3 typically has a width that ranges from about 2 mm to about 20 mm, usually from about 3 mm to about 5 mm. The thickness of the rigid bottom surface 1 typically ranges from about 0.1 mm to about 10 mm, usually from about 0.25 mm to about 5 mm and more usually from about 0.5 mm to about 2 mm.

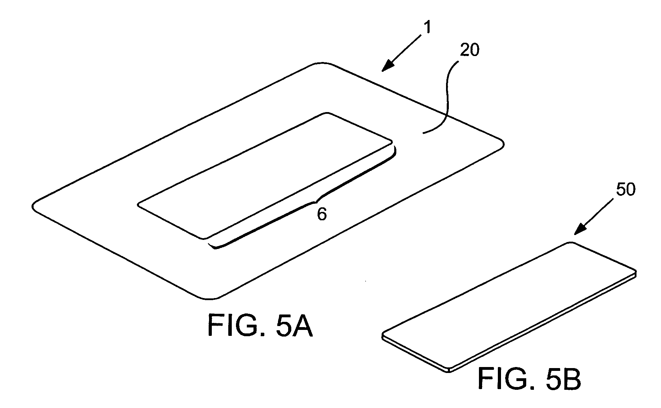

In certain embodiments of the subject devices, as shown in Figure 5A, the rigid bottom surface 1 is configured to be compatible with an array reader such as a MICROARRAY scanner available from Agilent Technologies of Palo Alto, CA. such that the rigid bottom surface 1 with substrate 110 positioned thereon may be directly placed, i.e., mounted, in an array reader so that the at least one array 112 may be read while positioned in the rigid bottom surface 1, as will be described in more detail below. That is, the rigid bottom surface 1 may be used as a means for handling a substrate both during an array assay and during the subsequent reading of the array. Accordingly, in this particular embodiment, rigid bottom surface 1 has a hole or an opening 6 therethrough dimensioned such that it is smaller than substrate 110 so that substrate 110 may be positioned on the perimeter of opening 6 so as to be positioned over opening 6. A removable shield 5, as shown in Figure 5B may be positioned over the opening 6 and/or on surface 111a of substrate 110 to protect or shield the exposed portion of the substrate 110 to prevent damage, fingerprints, marring, and the like of the exposed substrate 110 until the device is placed into an array reader. Any suitable material may be used to fabricate the removable shield, where examples include, but are not limited to, plastics such as polytetrafluoroethylene, polypropylene, polystyrene, PVC, and blends thereof, elastomeric materials, siliceous materials, e.g., glasses, fused silica, ceramics and the like.

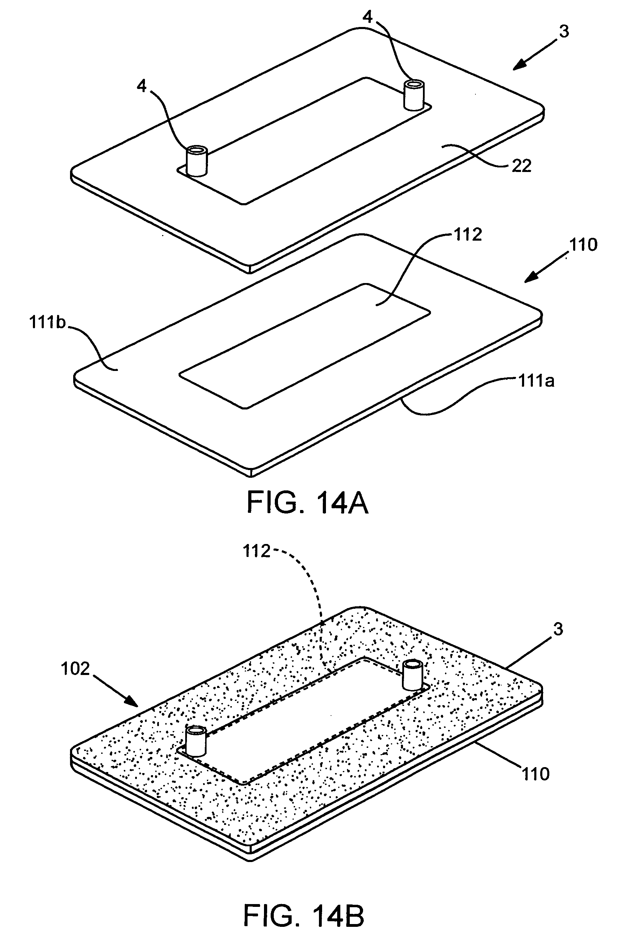

As mentioned above, in certain embodiments the substrate having at least one array thereon serves as the bottom surface such that a cover is sealed to the array substrate by a frangible seal. Figure 14A shows an exploded view of array assay device 102 that includes cover 3 sealable by a frangible seal to substrate 110 having at least one array 112 and Figure 14B shows device 102 assembled together such that cover 3 is frangibley sealed to substrate 110 to cover array(s) 112 (shown in phantom). A removable shield, as described above, may be positioned over surface 111a of substrate 110 to protect or shield the exposed portion of the substrate 110 to prevent damage, fingerprints, marring, and the like of the exposed substrate 110.

The cover 3 is shaped to correspond to rigid bottom surface 1 (and/or to correspond to an array substrate) and also to correspond to the size and shape of substrate 110 so that the cover 3 may be sealed to rigid bottom surface 1 by a frangible seal, thereby forming an assay area over the array 112 of substrate 110 sealed therebetween.

The cover 3 also includes a border 22 which is configured to be associated with border 20 of rigid bottom surface 1 to form the frangible seal that seals the two together. Cover 3 also includes at least one fluid access port 4, and typically includes two access ports, for the introduction and/or removal or fluid and/or gases from the assay area(s) of the sealed device. Usually, the cover 3 will include a first fluid introduction port and a second venting port. The thickness of the cover 3 typically ranges from about 0.1 mm to about 10 mm, usually from about 0.25 mm to about 5 mm and more usually from about 0.5 mm to about 2 mm. As mentioned above, the cover 3 may be rigid or flexible, i.e., cover 3 may be able to be peeled back or away from rigid bottom surface 1 to break the frangible seal between the cover 3 and the rigid bottom surface 1.

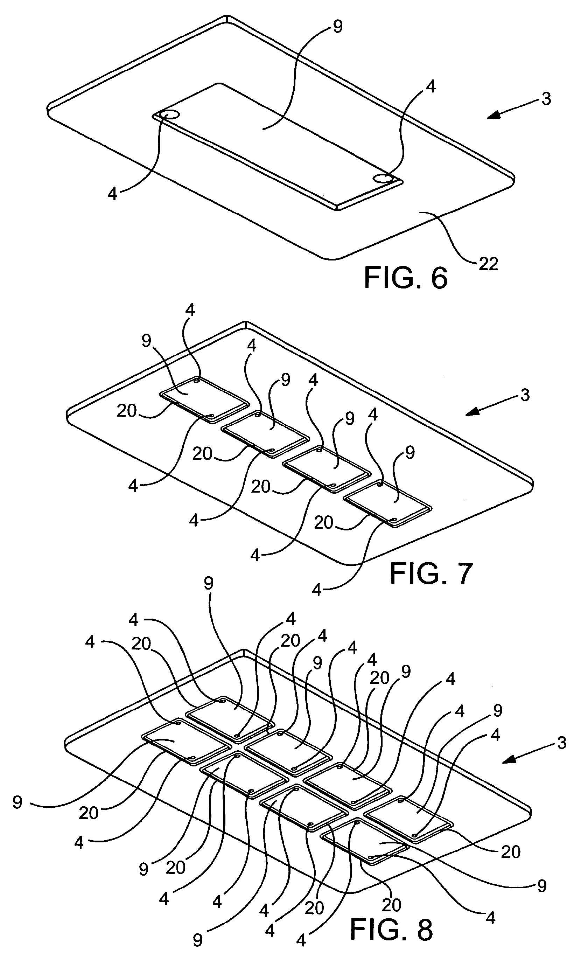

Figure 6 shows the inner surface of cover 3 which includes a recessed portion 9 such that upon frangibley sealing substrate 110 between the cover 3 and the rigid bottom surface 1, the perimeter of the recess 9 forms a seal with the substrate 110 to produce an assay area defined by the space between the recess 9 and the substrate 110. It will be apparent that the recess may be included in the rigid bottom surface instead of or in addition to the cover, for example if the array side of the substrate is positioned facing the bottom surface instead of facing the cover. The recess will be described herein with respect to the cover, for ease of description only, where such description is by way of example and is in no way intended to limit the scope of the claims.

The seal that is formed by the walls or edges of the recess contacting the substrate is substantially vapor and fluid tight, i.e., the assay area is substantially vapor and fluid tight. Figure 7 shows the inner surface of cover 3 having a plurality of recesses 9 such that each individual recess forms a seal with the substrate 110 to produce a plurality of assay areas when the device 2 is frangibley sealed in a closed configuration e.g., over a plurality of arrays on substrate 110. Regardless of the number of assay areas produced, the volume of each assay area, i.e., the assay volume, associated with each array may vary depending on the specific array substrate size, the number of arrays, the type of array assay performed, etc. In many embodiments of the subject devices, the volume of the assay area ranges from about 10 µl to about 1000 µl.

The subject array assay devices may also include a sealing element 20 which forms a seal around the array 112 on the substrate 110. By sealing element is meant any sealing device or structure that produces a seal between two surfaces, such as a gasket, a lip, ledge or ridge, material interface, viscous sealant, or the like and which does not substantially adversely interfere with the array assay such as by leaching, non-specific binding, or other physical or chemical degradation. Figure 7 shows sealing element 20 configured as a lip around each recess 9. Figure 8 shows another embodiment such that instead of having multiple, separate recesses 9 as shown in Figure 7, a single recess 9, such as recess 9 shown in Figure 6, may be partitioned into separate areas or recesses by a sealing element 20. In all embodiments employing a sealing element 20, the sealing element may be a separate component, may be integrally formed with a substrate, may be positioned on the substrate 110 or may be positioned on the cover 3 and in certain embodiments may be positioned on the base. In certain embodiments of the subject devices, the sealing element 20 may be modified to include continuous ridges so that the pressure supplied by frangibley sealing the rigid bottom surface 1 and the cover 3 is higher at those locations and preferably causes them to compress.

As mentioned above, the cover 3 includes one or more fluid access ports 4 for the introduction and/or removal of fluids and/or gases from the subject array assay devices and more specifically from the sealed assay areas. In those embodiments having more than one assay area, each assay area will usually have at least one respective access port 4 to enable testing of multiple samples with multiple arrays without cross-contamination, where each assay area typically has two respective access ports- one for the introduction and another for removal of fluids and/or gases, i.e., one for fluid introduction and the other for venting. Fluid and/or gases may be introduced into an array assay device through an access port 4 using any convenient protocol such as a pipette, syringe, etc. To minimize fluid loss through the ports 4, the access ports 4 may also include a closure mechanism (not shown) such as duckbill valves, septa, caps, check valves, self-sealing or sealable gaskets, and the like.

As described above, a feature of the subject devices is the presence of a frangible seal which seals the rigid bottom surface 1 and the cover 3 to each other or the cover to an array substrate. By frangible seal it is meant a seal that is readily or easily broken apart or fracturable. In such a frangible seal, the seal will separate before the material adjacent to the seal is actually torn, fractured, broken or separated. The frangible seal may be formed by a variety of mechanisms, including but not limited to applying at least one of thermal energy, ultrasonic energy, RF energy, and adhesive such as 9425 UPVC double coated film carrier reclosable adhesive and 665 reclosable adhesive, both of which are available from 3M Corporation.

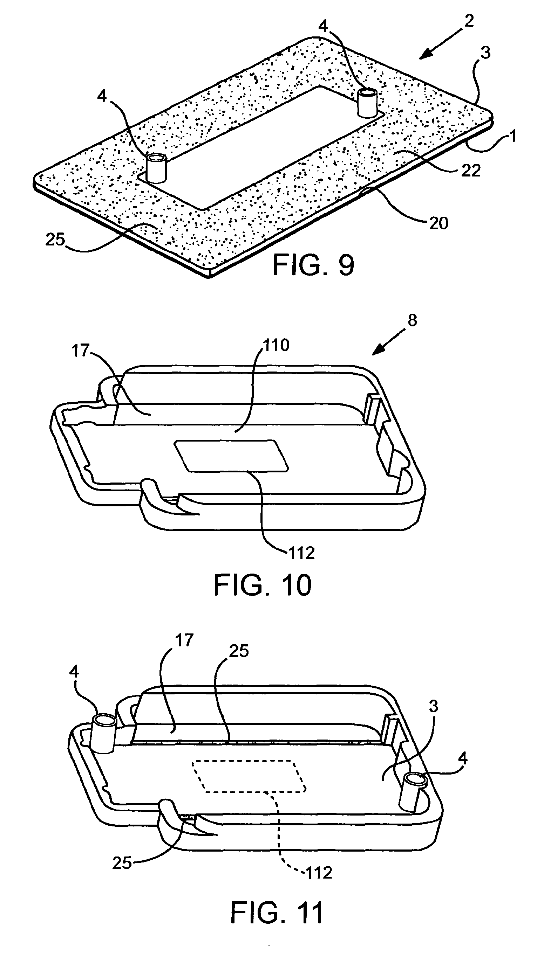

Figure 9 shows the rigid bottom surface 1 and the cover 3 of device 2 sealed to each other by the frangible seal 25, represented herein by a stippled pattern. As shown in Figure 9, the frangible seal 25 is formed between border 22 of the cover 3 and border 20 of rigid bottom surface 1, around substrate 110 positioned on substantially planar array positioning area 5 such that an assay area is produced around at least one array 112 on substrate 110 due to the recess 9. Regardless of the mechanism used to form frangible seal 25, it is formed such that it is substantially vapor and fluid tight. By substantially vapor and fluid tight is meant that the array assay device is capable of preventing substantial evaporation of the fluidic contents of the array assay device during an array assay. That is, the array assay device is capable of preventing substantial evaporation of vapor and/or fluid therefrom.

The width of the frangible seal 25 will vary according to the method used to produce the frangible seal 25, the dimensions of the substrate 110, the dimensions of the borders 20 and 22, and the like. Typically, the width of the frangible seal will range from about 0.1 mm to about 50 mm, usually from about 0.5 mm to about 20 mm and more usually from about 1 mm to about 5 mm. However, these dimensions may vary as necessary.

The force required to fracture or break the frangible seal 25 is minimal such that the frangible seal 25 may be easily and readily broken upon application of force thereto. The force is typically applied manually. Typically, the force required to break the seal ranges from about 5 newtons/100 mm to about 500 newtons/100 mm, usually from about 8 newtons/100 mm to about 20 newtons/100 mm and more usually from about 10 newtons/100 mm to about 15 newtons/100 mm.

### Substrate Receiving Frame

Also provided are substrate receiving frames for positioning a substrate 110 having at least one array therein before being frangibley sealed between rigid bottom surface 1 and cover 3. Figure 10 shows an exemplary embodiment of a substrate receiving frame 8 having substrate 110 positioned therein. Substrate receiving frame 8 has an opening 17 for positioning the substrate 110 therein using any suitable mechanical, physical or chemical means. Usually, the frame will include ledges or rails (not shown) onto which the substrate 110 is positioned. The array assay device is frangibley sealed as described above, however where the substrate 110 is positioned in a substrate receiving frame 8, the cover 3 and the rigid bottom surface 1 are sealed to each other, or the cover is sealed to the array substrate, such that they are positioned inside substrate receiving frame 8, as shown in Figure 11. The substrate receiving frame 8 may be compatible with an array reader such as a MICROARRAY scanner available from Agilent Technologies of Palo Alto, CA. where such a compatible array reader will typically have a suitable mounting means for receiving and releasably retaining the substrate receiving frame 8 in a known position. Accordingly, after the array assay is complete and the frangible seal 25 has been broken, the frame 8 with the substrate 110 therein may be directly placed, i.e., mounted, into an array reader. That is, the substrate receiving frame 8 may be used as a means to handle a substrate 110 both during the assay and the reading of the array.

The size and shape of a substrate receiving frame 8 may vary according to the size and shape of the substrate 110 and corresponding array assay device. By way of example only and not limitation, in certain embodiments the substrate receiving frame 8 is rectangular in shape and the length thereof typically ranges from about 10 mm to about 200 mm, usually from about 20 mm to about 100mm and more usually from about 22 mm to about 80 mm, the width typically ranges from about 10 mm to about 200 mm, usually from about 20 mm to about 100mm and more usually from about 22 mm to about 50 mm and the thickness typically ranges from about 1 mm to about 100 mm, usually from about 3 mm to about 50 mm and more usually from about 5 mm to about 20 mm.

The subject substrate receiving frames 8 may be manufactured from a variety of materials, with the only limitation being that the such materials used to fabricate the subject frames will not substantially interfere with the assay reagents and assay and will have minimal non specific binding characteristics, e.g., substantially chemically inert, thermally stable, etc. Specifically, the materials should be chemically and physically stable under conditions employed for array assay procedures. Examples of such materials may include, but are not limited to, plastics such as polytetrafluoroethylene, polypropylene, polystyrene, polycarbonate, PVC, and blends thereof, stainless steel and alloys thereof, siliceous materials, e.g., glasses, fused silica, ceramics and the like. In those embodiments where the substrate receiving frame 8 is also compatible and thus used with an array reader or scanner, the material used will be compatible with the reader as well. For example, where the reader is an optical scanner, the material of the substrate receiving frame 8 will usually be opaque, such as an opaque plastic, e.g., black acrylonitrile-butadiene-styrene (ABS) plastic (although other material could be used as well).

### Array Holders

Also provided are array holders suitable for use with the subject array assay devices. More specifically, the subject array holders are used to retain the substrates which include one or more arrays. The array holders of the subject invention are configured to be inserted into the subject array assay devices described above and may also be used with the subject substrate receiving frames. The array holders of the subject invention may be configured to be compatible with array scanners or readers for interrogating or reading the array after an assay has been performed such as a hybridization assay or the like, e.g., array optical scanners such as the MICROARRAY scanner available from Agilent Technologies, Inc. of Palo Alto, CA, where such a compatible scanner will typically have a suitable mounting means for receiving and releasably retaining the array holder in a known position.

The subject array holders serve multiple purposes such as substrate edge protection, compatibility with array scanners and the ability to grasp and manipulate an array without contacting the array itself, e.g., during a wash protocol, during transport, e.g., to an array reader, and the like. Furthermore, the array holders enable a wide range of substrate sizes to be used with the subject array hybridization chambers. That is, a substrate shorter in length than a typical substrate such as shorter in length than a typical 1" by 3" microscope slide, may be first retained in the array holder which itself is about 1" by about 3", or is the size of a typical substrate or of a suitable size that is compatible with the array assay device or frame. Thus, when a substrate having a length shorter than is able to be accommodated by a subject array assay device or frame, for example shorter in length than about 3',' is retained by a subject holder, the shorter substrate may still be used with a subject array assay device. In certain embodiments, spacers may be added to the holder as well to accommodate the remaining volume/area remaining from the shorter length substrate to allow an appropriate seal to be produced therewith and the volume within the assay area(s) to remain constant no matter the dimensions of the substrate.

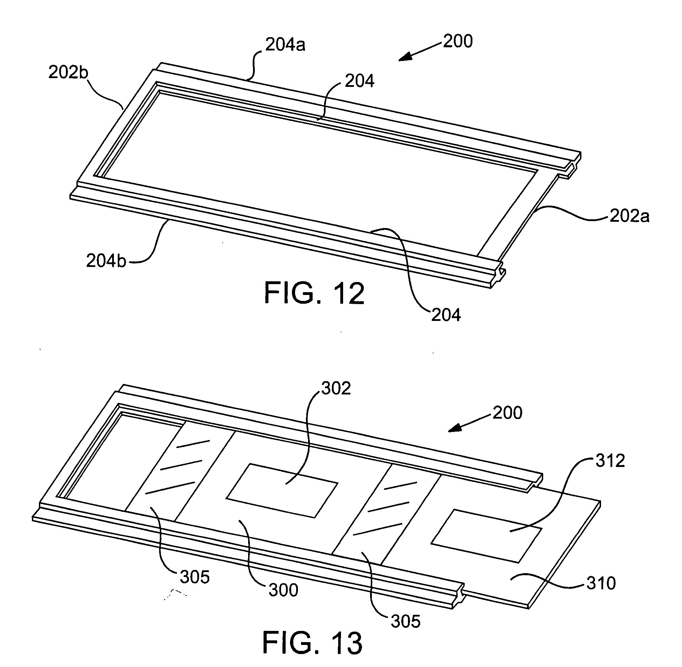

Figure 12 shows an exemplary embodiment of a subject array holder. Array holder 200 includes two opposed side portions 204a and 204b with a channel 206 positioned therebetween, and extending in a direction between open end 202a and closed end 202b. Opposed side portions 204a and 204b have ledges 204 running the lengths of side portions 204a and 204b which receive and retain a substrate, i.e. upon which a substrate rests. In use, a substrate is inserted into holder 200 via open end 202a. Figure 13 shows holder 200 having a substrate 300 having one or more arrays 302 retained therein and a substrate 310 having one or more arrays 312 partially inserted through open end 202a. As is shown, substrates 300 and 310 have lengths shorter than the length of the holder 200 and thus spacers 305 are used to take-up the remaining space.

The size and shape of an array holder 200 may vary according to the size and shape of a substrate and corresponding array assay device. By way of example only and not limitation, in certain embodiments the array holder 200 is rectangular in shape and the length thereof typically ranges from about 10 mm to about 200 mm, usually from about 20 mm to about 100 mm and more usually from about 22 mm to about 80 mm, the width typically ranges from about 10 mm to about 100 mm, usually from about 20 mm to about 50 mm and more usually from about 22 mm to about 30 mm and the thickness typically ranges from about 1 mm to about 100 mm, usually from about 3 mm to about 50 mm and more usually from about 5 mm to about 20 mm. The subject holders may be manufactured from a variety of materials, with the only limitation being that the such materials used to fabricate the subject holders will not substantially interfere with the assay reagents and assay and will have minimal non specific binding characteristics, e.g., substantially chemically inert, thermally stable, etc. Specifically, the materials should be chemically and physically stable under conditions employed for array assay procedures. Examples of such materials may include, but are not limited to, plastics such as polytetrafluoroethylene, polypropylene, polystyrene, polycarbonate, PVC, and blends thereof, stainless steel and alloys thereof, siliceous materials, e.g., glasses, fused silica, ceramics and the like. In those embodiments where the array holder 200 is also compatible and thus used with an array reader or scanner, the material used will be compatible with the reader as well For example, where the reader is an optical scanner, the material of the array holder will usually be opaque, such as an opaque plastic, e.g., black acrylonitrile-butadiene-styrene (ABS) plastic (although other material could be used as well).

### METHODS

As summarized above, methods are also provided for performing an array based assay such as a hybridization assay or any other analogous binding interaction assay. Generally, a sample suspected of including an analyte of interest, i.e., a target molecule, is contacted with an array mounted in a subject array assay device under conditions sufficient for the analyte target in the sample to bind to its respective binding pair member that is present on the array. Thus, if the analyte of interest is present in the sample, it binds to the array at the site of its complementary binding member and a complex is formed on the array surface. The presence of this binding complex on the array surface is then detected, e.g., through use of a signal production system, e.g., an isotopic or fluorescent label or the like present on the analyte, as described above. The presence of the analyte in the sample is then deduced from the detection of binding complexes on the substrate surface.

As mentioned above, the subject methods may be used in a variety of array based assays, where hybridization reactions will be used herein for exemplary purposes only, and is not intended to limit the scope of the claims. in hybridization assays, a sample of target analyte such as target nucleic acids is first prepared, where preparation may include labeling of the target nucleic acids with a label, e.g., with a member of signal producing system and the sample is then contacted with the array under hybridization conditions, whereby complexes are formed between target analytes such as nucleic acids that are complementary to probe sequences attached to the array surface. The presence of hybridized complexes is then detected. Specific hybridization assays of interest which may be practiced using the subject arrays include: gene discovery assays, differential gene expression analysis assays; nucleic acid sequencing assays, and the like. Patent applications describing methods of using arrays in various applications include: WO 95/21265; WO 96/31622; WO 97/10365; WO 97/27317; EP 373 203; and EP 785 280 and U.S. Patents Nos. 5,143,854; 5,288,644; 5,324,633; 5,432,049; 5,470,710; 5,492,806; 5,503,980; 5,510,270; 5,525,464; 5,547,839; 5,580,732; 5,661,028; 5,800,992.

On practising the preferred methods, the first step is to provide a subject array assay device having a substrate having at least one array sealed between a rigid bottom surface and a cover, wherein the rigid bottom surface and cover are sealed to each other by a frangible seal, as described above. As described above, in certain embodiments the array substrate serves as the rigid bottom surface such that the cover is frangibley sealed to the array substrate. A sealing element may also be employed if appropriate. In certain embodiments of the subject invention, the substrate is first positioned in a substrate receiving frame and/or an array holder before being sealed between the rigid bottom surface and the cover. The substrate is positioned on the rigid bottom surface such that the array side faces the cover. In those embodiments employing a rigid bottom surface having an opening therein, a removable shield is usually positioned over the opening and/or the non array surface of the substrate so as to protect the substrate.

By frangibley sealing the cover to the rigid bottom surface or to the array substrate, a seal is provided around at least one array on the array substrate by the perimeter of the recess, where the seal produces at least one substantially vapor and fluid tight assay area defined by the recess of the cover and the substrate (and a sealing element, if employed) when the array assay device is frangibley sealed together. Typically, if more than one array is present on substrate, a corresponding number of assay areas are formed such that each array is surrounded by a respective substantially vapor and fluid tight assay area.

Once one or more seals produce one or more assay areas around one or more arrays, the one or more arrays are contacted with a fluid sample suspected of containing target analyte, e.g., target nucleic acids, that are complementary to probe sequences attached to the array surface. As will be apparent to those of skill in the art, the sample may be any suitable sample which includes a member of a specific binding pair. That is, the sample will be a sample capable of binding with a biopolymeric probe bound to the surface of the substrate. Typically, the sample includes the target analyte, often pre-amplified and labeled.

Thus, at some prior to the detection step, described below, any target analyte present in the initial sample contacted with the array is labeled with a detectable label. Labeling can occur either prior to or following contact with the array. In other words, the analyte, e.g., nucleic acids, present in the fluid sample contacted with the array may be labeled prior to or after contact, e.g., hybridization, with the array. In some embodiments of the subject methods, the sample analytes e.g., nucleic acids are directly labeled with a detectable label, wherein the label may be covalently or non-covalently attached to the nucleic acids of the sample. For example, the nucleic acids, including the target nucleotide sequence, may be labeled with biotin, exposed to hybridization conditions, wherein the labeled target nucleotide sequence binds to an avidin-label or an avidin-generating species. In an alternative embodiment, the target analyte such as the target nucleotide sequence is indirectly labeled with a detectable label, wherein the label may be covalently or non-covalently attached to the target nucleotide sequence. For example, the label may be non-covalently attached to a linker group, which in turn is (i) covalently attached to the target nucleotide sequence, or (ii) comprises a sequence which is complementary to the target nucleotide sequence. In another example, the probes may be extended, after hybridization, using chain-extension technology or sandwich-assay technology to generate a detectable signal (see, e.g., U.S. Patent No. 5,200,314). Generally, such detectable labels include, but are not limited to, radioactive isotopes, fluorescers, chemiluminescers, enzymes, enzyme substrates, enzyme cofactors, enzyme inhibitors, dyes, metal ions, metal sols, ligands (e.g., biotin or haptens) and the like.

In one embodiment, the label is a fluorescent compound, i.e., capable of emitting radiation (visible or invisible) upon stimulation by radiation of a wavelength different from that of the emitted radiation, or through other manners of excitation, e.g. chemical or non-radiative energy transfer. The label may be a fluorescent dye. Usually, a target with a fluorescent label includes a fluorescent group covalently attached to a nucleic acid molecule capable of binding specifically to the complementary probe nucleotide sequence.

Accordingly, sample is introduced into the array assay device and more specifically to the assay area(s) formed around the one or more arrays, where the sample is retained due to the vapor and fluid tight seal of the assay area so that the array does not dry out. The sample is thus introduced into one or more assay areas via one or more access ports 4 either manually or automatically. Thus, each assay area may be accessible through at least one port 4 and sample may be introduced into respective assay areas through respective ports, e.g., introduced through one respective port and vented through another port. That is, the sample may be introduced using a pipette, syringe or any other suitable introduction protocol. In certain embodiments, one port provides a vent and sample is introduced through another port. Once introduced into an assay area, the sample is substantially confined to the assay area. In this regard, multiple samples may be tested with multiple arrays without cross-contamination, i.e., multiple samples may be introduced into different assay areas, where the samples employed may be the same or may be different.

There are also provided methods for mixing fluid in an assay area, e.g., sample and/or wash fluid, where the fluid may be mixed using any convenient method such as shaking, turbulence, rotation, etc. In one embodiment, described in detail in U.S. Patent No. 6,258,593,
a bubble is provided in the assay area by incomplete filling of the assay area or by addition of a gas to the assay area with the fluid, where the assay area may further include a surfactant to facilitate the mixing. Mixing is accomplished by moving the bubble within the assay area during the binding interaction to displace the fluid therein.

Accordingly, the sample is contacted with the array under stringent conditions to form binding complexes on the surface of the substrate by the interaction of the surface-bound probe molecule and the complementary target molecule in the sample. In the case of hybridization assays, the sample is contacted with the array under stringent hybridization conditions, whereby complexes are formed between target nucleic acids that are complementary to probe sequences attached to the array surface, i.e., duplex nucleic acids are formed on the surface of the substrate by the interaction of the probe nucleic acid and its complement target nucleic acid present in the sample. An example of stringent hybridization conditions is hybridization at 50°C or higher and 0.1×SSC (15 mM sodium chloride/1.5 mM sodium citrate). Another example of stringent hybridization conditions is overnight incubation at 42°C in a solution: 50% formamide, 5 × SSC (150 mM NaCI, 15 mM trisodium citrate), 50 mM sodium phosphate (pH7.6), 5 × Denhardt's solution, 10% dextran sulfate, followed by washing the filters in 0.1 × SSC at about 65°C. Hybridization involving nucleic acids generally takes from about 30 minutes to about 24 hours, but may vary as required. Stringent hybridization conditions are hybridization conditions that are at least as stringent as the above representative conditions, where conditions are considered to be at least as stringent if they are at least about 80% as stringent, typically at least about 90% as stringent as the above specific stringent conditions. Other stringent hybridization conditions are known in the art and may also be employed, as appropriate.

Once the incubation step is complete, the array is washed at least one time to remove any unbound and non-specifically bound sample from the substrate, generally at least two wash cycles are used. Washing agents used in array assays are known in the art and, of course, may vary depending on the particular binding pair used in the particular assay. For example, in those embodiments employing nucleic acid hybridization, washing agents of interest include, but are not limited to, salt solutions such as sodium, sodium phosphate and sodium, sodium chloride and the like as is known in the art, at different concentrations and may include some surfactant as well.

In washing the substrate and more specifically the at least one array thereon, the substrate may be removed from the array assay device or may be washed while still positioned in the device. To remove the substrate from the array assay device, the frangible seal is broken. In certain embodiments, the frangible seal is broken by the application of manual force provided by the user. In many embodiments, the user peels back the flexible cover of the device to break the frangible seal. In other embodiments, the user may simply grip the rigid bottom surface or array substrate and the cover and turn them in opposite directions, such as the rigid bottom surface 1 clockwise and the cover counter-clockwise. In some embodiments, a mechanical device such as a knife or the like may be employed to break the frangible seal. If the substrate is removed from the array assay device for washing, the substrate may remain in the substrate receiving frame and/or the array holder, if used, during washing so that the user may simply engage the substrate receiving frame and/or the array holder during washing and not the substrate itself, thereby minimizing contamination of the array. Similarly, the substrate may remain in the rigid bottom surface, for example if a rigid bottom surface having an opening to accommodate the substrate, as shown in Figure 5A, is used or if the rigid bottom surface includes a viewing window through which the array may be read. Typically, the shield is removed from the substrate, if previously attached thereto. In those embodiments where the substrate remains in the array assay device during washing, fluid may be removed through an access port and wash fluid may be introduced through an access port 4.

Following the washing procedure, as described above, the at least one array is then interrogated or read so that the presence of the binding complexes is then detected i.e., the label is detected using colorimetric, fluorimetric, chemiluminescent or bioluminescent methods. If not already done, e.g., for the washing steps, the substrate is removed from the array assay device for reading by breaking the frangible seal as described above. The substrate may be removed with the rigid bottom surface, if the rigid bottom surface is to be used in the array reader (where the shield is removed prior to reading), and/or may be removed with the substrate receiving frame and/or array holder, if used, if the substrate receiving frame and/or the array holder are to be used in the array reader.

Accordingly, the subject methods preferably also include retaining a substrate having at least one array in a substrate receiving frame and/or an array holder, positioning the at least one array retained in the frame and/or holder in an array assay device and performing an array assay with the at least one array in the frame and/or holder. Following the completion of the array assay, the frame and/or the holder with the substrate having at least one array retained thereby is removed from the array assay device and directly placed, i.e. operatively mounted, into or on an array scanner or reader. In this manner, the at least one array may then be read or scanned by the array reader while the array is still held by the substrate receiving frame and/or carry holder. That is, the substrate receiving frame and/or array holder may be used to handle a substrate having at least one array both during the assay and during the scanning or reading of the array. The above described general methods for positioning and retaining a substrate having at least one array in a substrate receiving frame and/or an array holder, placing the retained substrate having at least one array in an array assay device, performing an array assay using the array assay device and retained substrate, removing the retained substrate having at least one array from the array assay device and mounting the retained substrate, i.e., the substrate held by the receiving frame and/or array holder, in or on an array scanner and scanning the at least one array while the array is retained by the substrate receiving frame and/or the array holder may be employed with the array assay devices described herein or any analogous array assay device. For example, the above described methods may be employed using the array assay devices described in copending U.S. application Serial No. 10/179,939, entitled "Array Assay Devices and Methods of Using the Same", to Shea, et al.; copending US Application Serial No. 10/179,938, entitled "Array Assay Devices and Methods of Using the Same", to Shea et al.; and copending U.S. application Serial No. 10/177,358, entitled "Array Assay Devices and Methods of Using the Same", to Shea et al.; and their counterpart European patent application nos. (RJ/N14218, RJ/N14219 and RJ/N14220) all filed on the same day as the present application.

Reading of the at least one array may be accomplished by illuminating the at least one array and reading the location and intensity of resulting fluorescence at each feature of the array to obtain a result. For example, a scanner may be used for this purpose, which is similar to the MICROARRAY scanner available from Agilent Technologies, Palo Alto, CA. Other suitable apparatus and methods for reading an array are described in U.S. Patent Application Serial Nos: Serial No. 20/087447 "Reading Dry Chemical Arrays Through The Substrate" by Dorsal et al., Serial No. 09/846125 "Reading Multi-Featured Arrays" by Dorsel et al.; and Serial No. 09/430214 "Interrogating Multi-Featured Arrays" by Dorsel et al.,

However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in U.S. Patent Nos. 6,251,685; 6,221,583, and elsewhere). Results from the reading may be raw results (such as fluorescence intensity readings for each feature in one or more color channels) or may be processed results such as obtained by rejecting a reading for a feature which is below a predetermined threshold and/or forming conclusions based on the pattern read from the array (such as whether or not a particular target sequence may have been present in the sample or whether or not a pattern indicates a particular condition of an organism from which the sample came). The results of the reading (whether further processed or not) may be forwarded (such as by communication) to a remote location if desired, and received there for further use (such as further processing).

The subject methods may also include pre-assembling or pre-packaging, i.e., pre-loading, a substrate having at least one array in an array assay device at a first site, e.g., a manufacturing facility or the like, and transporting the pre-packaged substrate to a second remote site for use in an array assay. For example, the array assay device may serve as the packaging for the substrate having at least one array during transport of the substrate and array(s) or the like from a remote manufacturer to the user, where an array assay is then performed in the same array assay device as that which is used as packaging for the substrate and at least one array. By "second site" in this context is meant a site other than the site at which the array is pre-packaged in the array assay device. For example, a second site could be another site (e.g., another office, lab, etc.) in the same building, city, another location in a different city, another location in a different state, another location in a different country, etc. Usually, though not always, the first site and the second site are at least in different buildings, and may be at least one mile, ten miles, or at least one hundred miles apart. "Transporting" in this context refers to any means of getting the pre-packaged array(s) from one site to the next, i.e., physically moving or shipping the pre-packaged array(s) to a second site. Once the array assay device with the substrate having at least one array pre-assembled or pre-packaged therein is received by a user at the second site, an array assay is performed using the array assay device and pre-packaged array(s). Following completion of the array assay, the substrate having at least one array is removed from the array assay device, positioned on an array scanner or reader and the at least one array is scanned by the array reader to obtain a result, as described above. As mentioned above, the substrate may be positioned in a substrate receiving frame and/or array holder prior to placement in an array assay device and the substrate may be retained in the substrate receiving frame and/or array holder during the scanning or reading of the at least one array, i.e., the substrate receiving frame and/or array holder may be operatively mounted on a scanner so that the array(s) may be scanned or read while retained in the substrate receiving frame and/or array holder to obtain a result. The above described general methods of array use may be employed with the array assay devices described herein or any analogous array assay device, for example those described in copending U.S. application Serial No. 10/179,939, entitled "Array Assay Devices and Methods of Using the Same", to Shea, et al.; copending US Application Serial No. 10/179,938, entitled "Array Assay Devices and Methods of Using the Same", to Shea et al.; and copending U.S. application Serial No. 10/177,358, entitled "Array Assay Devices and Methods of Using the Same", to Shea et al.; and their counterpart European patent application nos. (RJ/N14218, RJ/N14219 and RJ/N14220) all filed on the same day as the present application.

In certain embodiments, the foregoing general assay methods do not include those assay methods described in U.S. application Serial No. 09/919073, filed on July 30, 2001.

As mentioned above, in certain embodiments, the subject methods include a step of transmitting data from at least one of the detecting and deriving steps, as described above, to a remote location. By "remote location" it is meant a location other than the location at which the array is present and the array assay, e.g., hybridization, occurs. For example, a remote location could be another location (e.g. office, lab, etc.) in the same city, another location in a different city, another location in a different state, another location in a different country, etc. As such, when one item is indicated as being "remote" from another, what is meant is that the two items are at least in different buildings, and may be at least one mile, ten miles, or at least one hundred miles apart. "Communicating" information means transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data. The data may be transmitted to the remote location for further evaluation and/or use. Any convenient telecommunications means may be employed for transmitting the data, e.g., facsimile, modem, internet, etc.

### KITS

Finally, kits which include the subject array assay devices are envisaged. The subject kits at least include one or more subject array assay devices. Typically, a plurality of subject array assay devices is included. Arrays may also be provided. The arrays may be provided already positioned in a substrate receiving frame and/or a subject array holder. The kits may further include one or more additional components necessary for carrying out an analyte detection assay, such as sample preparation reagents, buffers, labels, and the like. As such, the kits may include one or more containers such as vials or bottles, with each container containing a separate component for the assay, and reagents for carrying out an array assay such as a nucleic acid hybridization assay or the like. The kit may also include a denaturation reagent for denaturing the analyte, buffers such as hybridization buffers, wash mediums, enzyme substrates, reagents for generating a labeled target sample such as a labeled target nucleic acid sample, negative and positive controls and written instructions for using the subject array assay devices for carrying out an array based assay. The instructions may be printed on a substrate, such as paper or plastic, etc. As such, the instructions may be present in the kits as a package insert, in the labeling of the container of the kit or components thereof (i.e., associated with the packaging or sub-packaging) etc. In other embodiments, the instructions are present as an electronic storage data file present on a suitable computer readable storage medium, e.g., CD-ROM, diskette, etc.

It is evident from the above results and discussion that the above described embodiments can provide devices and methods for performing array assays which are simple to use, have minimal components, do not require assembly and can be used with a multitude of different array formats. They can provide a number of advantages, including fluid loss prevention and the ability to test multiple samples with multiple arrays without cross-contamination.

The disclosures in United States patent application no. 10/177,376, from which this application claims priority, and in the abstract accompanying this application are incorporated herein by reference.

## Claims

1. An array assay device, including a substrate comprising at least one array sealed between a rigid bottom surface and a cover, wherein said rigid bottom surface and said cover are sealed to each other by a frangible seal.

2. A device according to claim 1, wherein said substrate serves as said rigid bottom surface such that said substrate and said cover are sealed to each other by said frangible seal.

3. A device according to claim 1 or 2, wherein said cover or said rigid bottom surface comprises at least one recess and said at least one recess produces at least one substantially vapor and fluid tight assay area around said at least one array.

4. A device according to claim 1, 2 or 3, wherein said array assay device comprises at least one sealing element for producing at least one seal around said at least one array.

5. A device according to any one of claims 1 to 4, including at least one access port.

6. An array assay device, including:
(a) a substrate comprising at least one array; and
(b) a cover, wherein said substrate and said cover are sealed to each other by a frangible seal.

7. A method of performing an array assay, including the steps of:
(a) providing an array assay device provided with a substrate comprising at least one array sealed between a rigid bottom surface and a cover, wherein said rigid bottom surface and said cover are sealed to each other by a frangible seal;
(b) contacting said at least one array with a sample; and
(c) performing an array assay.

8. A method of manufacturing an array assay device, including the step of frangibly sealing a substrate having at least one array to a cover, to produce an array assay device.

9. A method of performing an array assay, including the steps of:
(a) receiving, from a remote site, an array assay device according to any one of claim 1 to 6 comprising said substrate having at least one array pre-packaged therein;
(b) performing an array assay using said received array assay device;
(c) removing said pre-packaged substrate from said array assay device; and
(d) reading said at least one array to obtain a result.

10. A method of performing an array assay and reading a result of said array assay, including the steps of:
(a) performing an array assay using an array assay device according to claims 1 to 6 comprising a substrate having at least one array retained in at least one of a substrate receiving frame and an array holder;
(b) removing said retained substrate having at least one array from said array assay device; and
(c) mounting said retained substrate having at least one array on an array scanner so that said retained substrate having at least one array may be read by said scanner while retained in said at least one of a substrate receiving frame and an array holder.
